# EUROPEAN PATENT APPLICATION

(11) **EP 4 811 624 A1**
(43) Date of publication of application: **23.09.2026**
(21) Application number: 26159896.5
(22) Date of filing: 20.02.2026
(51) Int. Cl.: H02K 11/02, H02K 11/028, H02K 11/33

(54) **ELECTRIC MACHINE INCLUDING SUPPRESSING MATERIALS**

(30) Priority: 21.03.2025 US 202519086614
(71) Applicant: Deere & Company, Moline, IL 61265 (US)
(72) Inventor: PENCE, Jacob, 68163 Mannheim (DE); GODBOLD, Clement V., 68163 Mannheim (DE); BREMNER, Ronald D., 68163 Mannheim (DE); KING, Kevin, 68163 Mannheim (DE); BADGUJAR, Swapnil, 68163 Mannheim (DE); REEK, Christopher, 68163 Mannheim (DE)
(74) Representative: Holst, Sönke

(57) **Abstract**

Electric machine motor assemblies include suppressing materials for parasitic and/or bearing current reduction. An electric machine motor assembly including an electric motor configured to be driven by the electric power source, the electric motor including a stator frame, a stator winding attached to the stator frame, a rotor surrounded by the stator winding, a shaft extending from the rotor through the stator frame, and bearings between the shaft and the stator frame; and a suppressing material on the shaft.

## Description

### FIELD OF THE DISCLOSURE

Example embodiments are related to apparatuses for bearing current reduction, and more specifically, reducing bearing current through suppressing materials.

### BACKGROUND

Power electronics are commonly used to drive electric machines as part of an electric drive system. Power electronic driven drives may use fast switching voltage sourced inverters to deliver the current to generate movement and/or torque. Electric machines and attached mechanical drive train parts may have parasitic circuits which can be excited by the fast switching waveforms of the power electronics. In some cases enough energy can flow through the parasitic circuits, for example, bearing currents, which in some instances cause physical damage, potentially rendering the electric drive system and attached mechanical drive train inoperable. As such, there is a desire to mitigate the energy in the parasitic circuits, and in particular, bearing currents.

### SUMMARY

Some example embodiments provide electric machine motor assemblies including suppressing materials for parasitic and/or bearing current reduction.

Some example embodiments provide an electric machine motor assembly including an electric power source; an electric motor configured to be driven by the electric power source, the electric motor including a stator frame, a stator winding attached to the stator frame, a rotor surrounded by the stator winding, a shaft extending from the rotor through the stator frame, and bearings between the shaft and the stator frame; and a suppressing material on the shaft.
Some example embodiments provide an electric machine drive train including an electric machine motor assembly including an electric motor configured to be driven by an electric power source, the electric motor including a stator frame, a stator winding attached to the stator frame, a rotor surrounded by the stator winding, a shaft extending from the rotor through the stator frame, and bearings between the shaft and the stator frame; a transmission including a transmission shaft; a coupler connecting the shaft to the transmission shaft; and a suppressing material.

### BRIEF DESCRIPTION OF THE DRAWINGS

Example embodiments will be more clearly understood from the following detailed description taken in conjunction with the accompanying drawings. FIGS. 1-8 represent non-limiting, example embodiments as described herein.
FIG. 1 illustrates an electric drive system for an electrical machine according to some example embodiments.
FIGS. 2A and 2B illustrate an electric drive system for an electrical machine according to some example embodiments.
FIG. 3 illustrates a suppressing material according to some example embodiments.
FIG. 4 illustrates an electric drive system for an electrical machine according to some example embodiments.
FIGS. 5A and 5B illustrate electric drive systems for an electrical machine according to some example embodiments.
FIG. 6 illustrates an electric drive system for an electrical machine according to some example embodiments.
FIG. 7 illustrates an electric drive system for an electrical machine according to some example embodiments.
FIG. 8 illustrates an electric drive system for an electrical machine according to some example embodiments.
FIG. 9 illustrates a vehicle including an electrical machine according to some example embodiments.

### DETAILED DESCRIPTION

Some example embodiments will now be described more fully with reference to the accompanying drawings in which some example embodiments are illustrated.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

At least some example embodiments reduce and/or avoid voltage leakage (e.g., parasitic currents) through bearing currents in an electric machine such as, an electric motor, an electric drive system, and/or the like.

While using electric machines, bearings of the electric machines may develop an electrical charge leading to a discharge and/or may facilitate conducting a parasitic current towards ground. The development of an electrical charge leading to a discharge and/or conducting a parasitic current towards ground may be collectively or individually referred to as a parasitic current in this specification. When the electrical charge discharges and/or the parasitic current is great enough, the bearing and/or bearing races may, for example, overheat and deform or be otherwise damaged. As the bearing and/or bearing races deform, greater energy is required to induce or maintain rotation/motion in the electric machines, which is undesirable.

In some example embodiments a magnetic suppressing material may be used to reduce or prevent the parasitic current from forming by reducing or blocking the energy from reaching the bearings. Therefore, a life and efficiency of the electric machines according to some example embodiments may be improved.

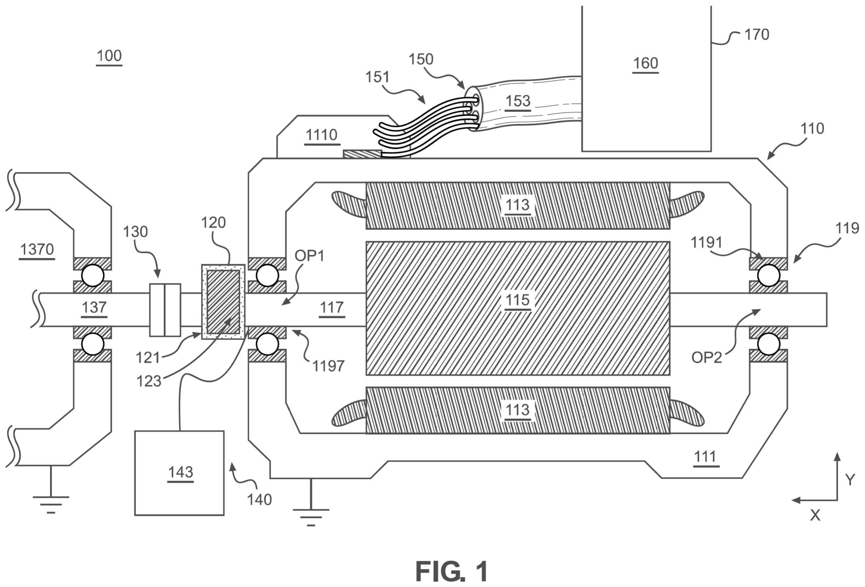

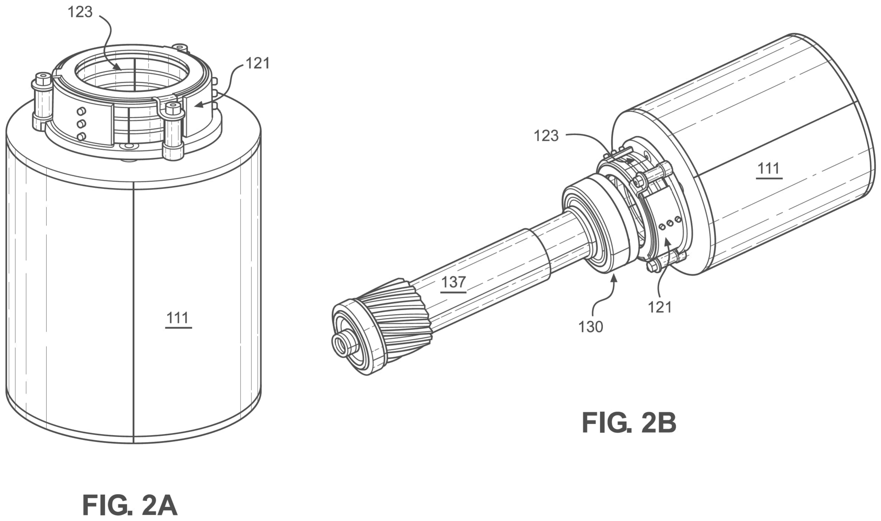

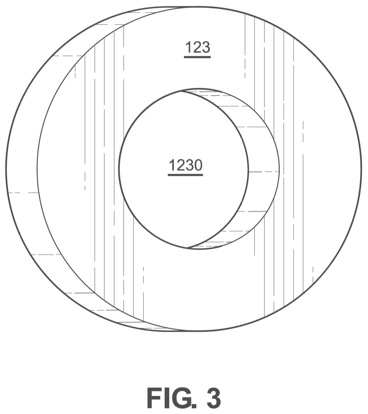

FIG. 1 illustrates an electric drive system for an electrical machine according to some example embodiments. FIGS. 2A and 2B illustrate an electric drive system for an electrical machine according to some example embodiments. FIG. 3 illustrates a suppressing material according to some example embodiments.

The electric drive system 100 may include a motor 110, a suppressing module 120, a coupler 130, a lubrication system 140, a bus bar 150, an inverter 160, and an electronic data processing system 170. The motor 110 may include a stator frame 111, a stator winding 113, a rotor 115, a shaft 117, and bearings 119. Hereinafter, the terms, hybrid machine, electrical motor, alternating current (AC) machine, and a motor may be used interchangeably. The electric drive system 100 may be referred to as an electric machine drive train.

In some example embodiments, the inverter 160 may be connected to the motor 110 through the bus bar 150. The bus bar 150 may include conductive wiring 151 extending from the inverter 160 to the motor 110, sheathed in cable shielding 153. The bus bar 150 may end at a protective earth terminal block 1110 on the stator frame 111. In some example embodiments, the stator frame 111 may be grounded. Alternatively, or additionally, a dedicated ground circuit may be provided to the protective earth terminal block and/or other features. In some example embodiments, the electronic data processing system 170 may be connected to the motor 110 through the inverter 160 and bus bar 150. However, in some example embodiments, the electronic data processing system 170 may be connected to the inverter 160 and motor 110, individually or together, separately from the bus bar 150. In some example embodiments, the electronic data processing system 170 may be referred to as an electric machine controller. The electronic data processing system 170 in combination with the inverter 160 may be referred to as an inverter system. The electronic data processing system 170 may be configured to control the inverter 160 and/or the motor 110.

In some example embodiments, the inverter 160 may be powered by a direct current (DC) voltage bus (now shown). The inverter 160 may provide electric power to the motor 110 (through the bus bar 150) by converting the supplied DC power into alternating current (AC) power which causes the motor 110 to spin the shaft 117, as discussed further below, and generate mechanical movement from the supplied power. In some example embodiments, the inverter 160 may receive AC power and supply DC power. In some example embodiments the inverter 160 may receive AC power and supply AC power. In some example embodiments the inverter 160 may receive DC power and supply DC power. Furthermore, in some example embodiments, the motor 110 and inverter 160 may perform regenerative functions and/or as a generator, in which an outside force rotates the shaft 117 which the motor 110 converts into electrical power, and the inverter 160 may convert and/or transmit the generated electrical power to another location, such as a battery (now shown) or another electric device.

In some example embodiments, the motor 110 may be an induction motor. In some example embodiments, the AC power supplied by the inverter 160 may be applied to the stator winding 113. The magnetic field created by the stator winding 113 may rotate based on the supplied AC power. The stator winding 113's rotating magnetic field may induce a current in the rotor 115, creating a second magnetic field and accelerating the rotor 115 to spin (e.g., generating torque). The spin of the rotor 115 is translated to the shaft 117. In some example embodiments, the motor 110 may be synchronous electric motor, permanent magnetic motor, or the like and operate on similar principles in which a current is supplied to a motor and toque is generated to rotate a shaft or the like. The inverter 160 may be referred to as an electric power source. The motor 110 may be referred to as an electric machine motor assembly.

The stator frame 111 may house (e.g., surround, hold) the stator winding 113, the rotor 115, and a portion of the shaft 117. In some example embodiments, the stator winding 113 may be mounted (attached, located on, etc.) an interior wall of the stator frame 111. The stator winding 113 may extend around a circumference of the interior of the stator frame 111, and may, for example, extend around an entirety of the circumference of the interior of the stator frame 111. The stator winding 113 may have a toroidal shape, however, the example embodiments are not limited thereto.

In some example embodiments, the shaft 117 may extend through the stator frame 111 in a first direction X. That is, the shaft 117 may have portions thereof supported on either side of the stator frame 111 by the stator frame 111 (and the bearings 119, etc.). The shaft 117 may be located at a center of the stator winding 113, that is, the shaft may extend through a central opening of the toroidal stator winding 113 at or about at the central axis of the stator winding 113.

The rotor 115 may be on the shaft 117 aligned with the stator winding 113. For example, the rotor 115 may be bonded, cured, adhered, or mechanically joined (e.g., directly joined) to the shaft 117. The rotor 115 is attached to the shaft 117 such that as one of the rotor 115 and the shaft 117 rotates, so does the other. The rotor 115 may have a length less than or equal to the stator winding 113 in the first direction X. The rotor 115 may be separated from the stator winding 113 in a second direction Y. As such, the rotor 115 is free to rotate while aligned to the stator winding 113.

The shaft 117 may extend through the stator frame 111 through openings OP1, OP2. The openings OP1, OP2 may be defined by the stator frame 111, and include a bearing race 1191 to fix the bearings 119 against the stator frame 111. The shaft 117 may include a reciprocal bearing race 1197 to fix the bearings 119 against the shaft 117. In some example embodiments, one or both of the bearing races 1191, 1197 may be present. As such, the shaft 117 may be aligned in the openings OP1, OP2 of the stator frame 111 relying on the bearings 119 to allow rotation of the shaft 117. The bearings 119 may include a lubricant to improve rotation and frictionless movement. The lubricant may be the same or different from the lubricant 141 discussed below.

In some example embodiments, the shaft 117 may connect to a coupler 130. The coupler 130 may connect the shaft 117 to a connecting shaft 137. The connecting shaft 137 may apply torque to an external device and/or machine 1370. The external device and/or machine 1370 may be, for example, a transmission to move a vehicle, a variator to cooperatively work with another engine, and/or the like. Alternatively, or additionally, the shaft may end in, or include a tooth gear to impart torque from the shaft 117 in direction different from the first direction X. The connecting shaft 137 may be referred to as a transmission shaft, and in some example embodiments, the connecting shaft 137 may connect to a transmission.

In some example embodiments, the lubrication system 140 may include a lubricant 141 (not shown), for example, along the shaft 117, the coupler 130, connecting shaft 137, and/or the bearings 119, and a lubrication module 143. The lubrication module 143 may, for example, purify the lubricant 141, cool the lubricant 141, and/or heat the lubricant 141 as may be required by the lubrication system 140 and overall electric drive system 100. In some example embodiments, the lubrication system 140 is an oil mist lubrication system. However, example embodiments are not limited thereto, and other methods may be used, such as, but not limited to fluid film lubrication, boundary film lubrication, etc. In some example embodiments, the lubrication system 140 may additionally function as a cooling system. In some example embodiments the electric drive system 100 may further include a cooling system (not show), for example an air cooling system.

As discussed above, while supplying the motor 110 with a current, at least one parasitic current may be created. For example, the parasitic current include at least one of a circulating bearing current, an electrostatic discharge machining (EDM) bearing current, or a rotor-to-ground current. However, these are only exemplary and other types of parasitic currents may be present in the electric drive system 100.

In some example embodiments, the circulating bearing current may form a circuit by traversing the rotor 115 and the shaft 117 through the bearings 119 into the stator frame 111 around to the bearings 119 and back into the shaft 117. The circulating bearing current may be generated by a parasitic flux between the stator winding 113 and the rotor 115. However, this example is only exemplary and the circulating bearing current may form through a different path in the electric drive system 100.

In some example embodiments, the EDM bearing current may form a circuit by traversing a gap between the rotor 115 and the stator winding 113 to go through the stator winding 113 into the stator frame 111 into the bearings 119 to the shaft 117 and back to the rotor 115. around to the bearings 119 and back into the shaft 117. The EDM bearing current may be generated by an electric potential difference between the stator frame 111, the stator winding 113, and the rotor 115. However, this example is only exemplary and the EDM bearing current may form through a different path in the electric drive system 100.

In some example embodiments, rotor-to-ground current may form a circuit connecting the protective earth terminal block and/or the stator winding 113 to ground through the stator frame 111 into the bearings 119 into the shaft 117 and then through the coupler 130 and the connecting shaft 137 to ground. The rotor-to-ground current may be generated by the above noted circuit (or one similar to) having a sufficiently low resistance. However, this example is only exemplary and the rotor-to-ground current may form through a different path in the electric drive system 100.

In some example embodiments, the parasitic current may be related to alternating flux due to asymmetric magnetic properties of the stator winding 113 and/or the rotor 115. In other words, there are a number of methods of generation and paths for bearing currents to conduct through the electric drive system 100.

In some example embodiments, the suppressing module 120 (for example, any one or more of the suppressing modules 120 to 120e) may prevent or reduce a parasitic current along and/or through the shaft 117. The suppressing module 120 may be exterior to and adjacent to the stator frame 111 and the bearings 119 along the shaft 117. That is, in some example embodiments, the suppressing module 120 may directly contact the stator frame 111. The suppressing module 120 may cover at least a portion of the shaft 117, and in some example embodiments, extend (e.g., extend entirely) between the stator frame 111 and the coupler 130.

In some example embodiments, the suppressing module may generate a magnetic field which suppresses the parasitic current. In some example embodiments, the first distance may be based on a size of the magnetic field generated by the suppressing module 120. For example, the magnetic field of the suppressing module 120 may interfere with the operation of the motor 110 if the suppressing module 120 is too powerful and/or too close to the rotor 115. As the magnetic field of the suppressing module 120 influences the rotor 115, the rotor 115 may require greater energy to rotate and generate torque and/or the rotor 115 may not rotate as desired based on the applied power to the stator winding 113. Additionally, the weight, placement, and/or shape of the suppressing module 120 may influence a balance of the rotor 115 and/or the mechanical performance of the electric drive system 100. As such, in some example embodiments, the suppressing module 120 may be a first distance from the rotor 115 based on the strength of the magnetic field generated by the suppressing module 120 and/or the mechanical properties of the electric drive system 100.

The suppressing module 120 may include a holder 121 and a suppressing material 123. In some example embodiments, the holder 121 may be a casing to hold the suppressing material 123, however, the holder 121 may alternatively be a frame, a cage, and/or a support to hold the suppressing material 123. The holder 121 may hold the suppressing material 123 to be adjacent (e.g., directly adjacent) to the surface of the shaft 117, separated by the lubricant 141 (e.g., separated by only the lubricant 141), and have a shape the same as or similar to an outer shape of the suppressing material 123. The holder 121 may be secured to the stator frame 111. Alternatively and/or additionally, the holder 121 may be secured to another feature not shown and/or be able to traverse the shaft 117 from the stator frame 111 to the coupler 130.

In some example embodiments, the suppressing material 123 may have a toroidal shape with an inner circumference larger than the outer circumference of the shaft 117 such that the suppressing material 123 surrounds the shaft 117. Referring to FIG. 3, the suppressing material 123 may have a toroidal shape with a cylindrical profile in a plan view defining a hole 1230. The shaft 117 may fit in the hole 1230 as seen in FIGS. 1 to 2B.

In some example embodiments, the inner circumference of the suppressing material 123 may have a same but larger shape to the profile of the shaft 117, a shape closely matched to the profile of the shaft 117, or may be a different shape in profile (e.g., a toothed circle, an oval). In some example embodiments, an outer profile of the suppressing material 123 may be circular, similar to, but larger than the inner circumference, however other shapes (e.g., a square, an octagon, an irregular polygon) and/or profiles may be used. For example, the suppressing material 123 and the holder 121 may have matching teeth and/or profiles to engage one another and prevent or reduce rotation and movement. Herein, "tooth" to "teeth" may refer to projections into or out of a surface in a regular or irregular pattern.

In some example embodiments, the suppressing material 123 does not directly contact the shaft 117 (or other feature which the suppressing module 120 surrounds, e.g., the coupler 130) but is separated by a gap therebetween. In some example embodiments, the gap between the suppressing material 123 and the shaft 117 may be determined by a position of the shaft 117, a size of the shaft 117, and/or manufacturing tolerances of the shaft 117 and/or the suppressing material 123. In some example embodiments, the gap is based on a compressibility of the lubricant 141, for example, the gap may be a distance equal to a minimum depth to allow flow of the lubricant 141.

In some example embodiments, the suppressing material 123 may be material capable of suppressing a current, for example, acting as a choke. In some example embodiment, the suppressing material 123 a ferrite material, for example, a manganese ferrite, and/or a nanocrystalline magnetic material. The particular material (e.g., ferrite composition) may be selected based on the electrical and material properties of electric drive system 100.

In some example embodiments, the suppressing material 123 may be one integral toroid or may be a plurality of toroids. In a case the suppressing material 123 is a plurality of toroids, the plurality of toroids may be the same or different materials.

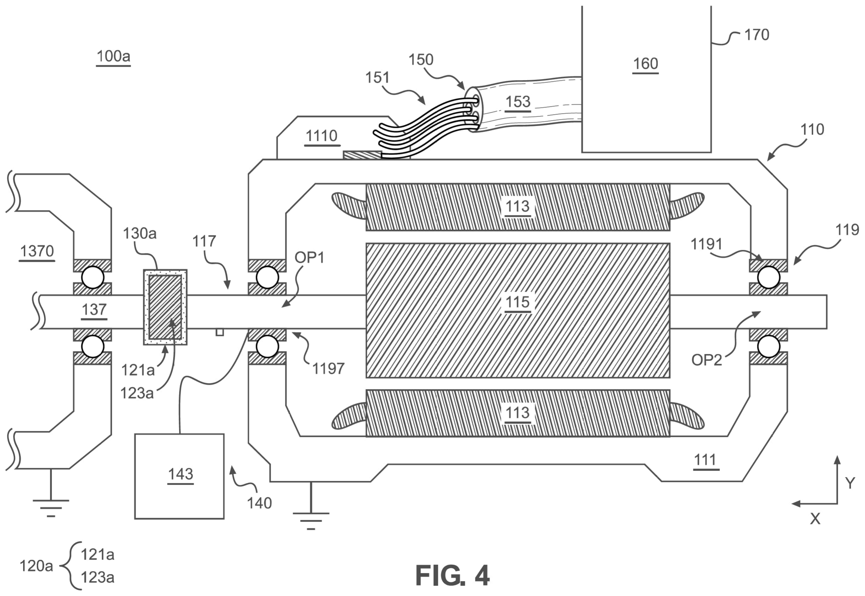

FIG. 4 illustrates an electric drive system for an electrical machine according to some example embodiments.

Below, for convenience of description, additional description associated with the components described above will be omitted to avoid redundancy. Referring to FIG. 4, the electric drive system 100a may include a motor 110, a suppressing module 120a, a coupler 130a, a lubrication system 140, a bus bar 150, an inverter 160, and an electronic data processing system 170. The coupler 130a may join a shaft 117 and a connecting shaft 137 the same as or similar to the coupler 130.

In some example embodiments, the suppressing module 120a may be at the coupler 130a between a shaft 117 and a connecting shaft 137. The suppressing module 120a may include a holder 121a and a suppressing material 123a. The suppressing module 120a may be the same as or similar to the suppressing module 120 beyond the suppressing module 120a being joined to the coupler 130a. The coupler 130a may have a same or a different diameter and/or shape to the shaft 117 and may have a same or a different diameter and/or shape to the connecting shaft 137.

In some example embodiments, the suppressing material 123a may have a toroidal shape with an inner circumference larger than the outer circumference of the coupler 130a such that the suppressing material 123a surrounds the coupler 130a. In some example embodiments, the inner circumference of the suppressing material 123a may have a same but larger shape to the profile of the coupler 130a, a shape closely matched to the profile of the coupler 130a, or may be a different shape in profile (e.g., a toothed circle, an oval). In some example embodiments, the holder 121a may be a casing to hold the suppressing material 123a, however, the holder 121a may alternatively be a frame, a cage, and/or a support to hold the suppressing material 123a. The suppressing material 123a may be a same or different material to the material of the suppressing material 123.

In some example embodiments, the suppressing module 120a may include an extended section to cover at least a portion of the shaft 117 and/or the connecting shaft 137. The extended section of the suppressing module 120a may have a same profile and/or shape as the suppressing module 120a over the coupler 130a.

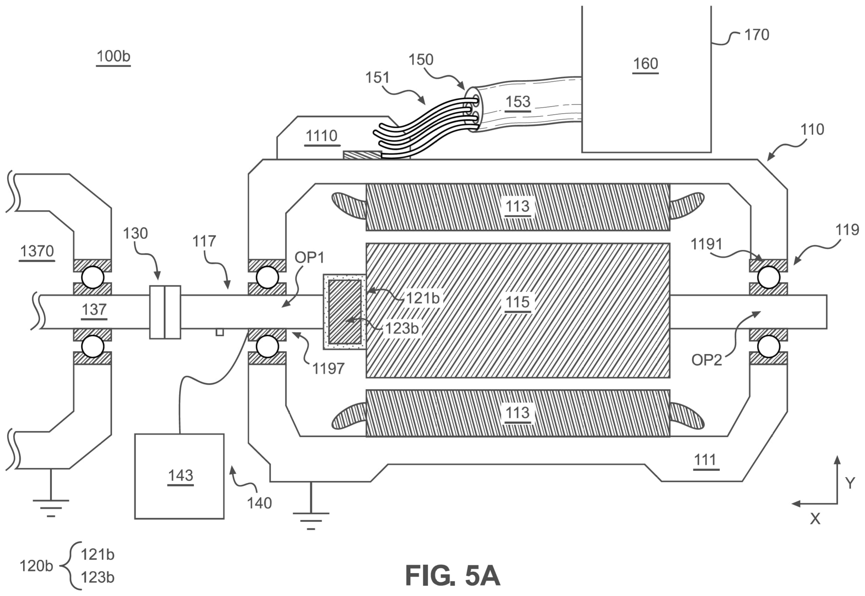

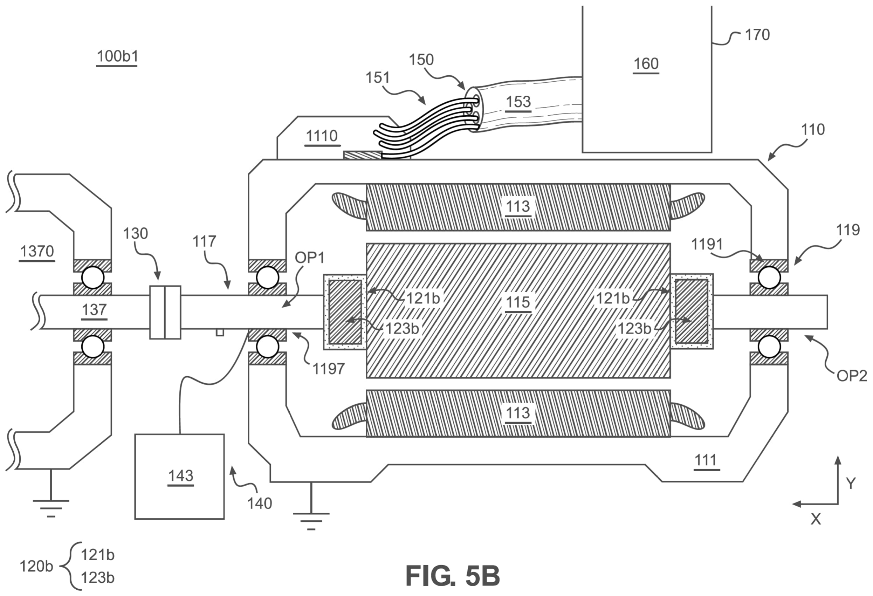

FIGS. 5A and 5B illustrate electric drive systems for an electrical machine according to some example embodiments.

Below, for convenience of description, additional description associated with the components described above will be omitted to avoid redundancy. Referring to FIG. 5A, the electric drive system 100b may include a motor 110, a suppressing module 120b, a coupler 130, a lubrication system 140, a bus bar 150, an inverter 160, and an electronic data processing system 170.

In some example embodiments, the suppressing module 120b is on the shaft 117 within the stator frame 111. In some example embodiments, the suppressing module 120b may be (e.g., directly) adjacent to the stator frame 111, (e.g., directly) adjacent to the rotor 115, or therebetween. In some example embodiments, the suppressing module 120b may extend from the rotor 115 to the stator frame along the shaft 117. In some example embodiments, the suppressing module 120b is fixed to one of the stator frame 111 or the rotor 115, or may be slidable along the shaft 117. The suppressing module 120b may be on a first side of the rotor 115 facing the coupler 130, on a second side of the rotor facing away from (e.g., opposite to) the coupler 130, or on both the first and second sides of the rotor 115. For example, as shown in FIG. 5B, the electric device system 100b1 may have two the suppressing modules 120b on the shaft 117 on opposing sides of the rotor 115.

The suppressing module 120b may include a holder 121b and a suppressing material 123b. The suppressing module 120b may be the same as or similar to the suppressing module 120 beyond the suppressing module 120b being within the stator frame 111.

In some example embodiments, the suppressing material 123b may have a toroidal shape with an inner circumference larger than the outer circumference of the shaft 117 such that the suppressing material 123b surrounds the shaft 117. In some example embodiments, the inner circumference of the suppressing material 123b may have a same but larger shape to the profile of the shaft 117, a shape closely matched to the profile of the shaft 117, or may be a different shape in profile (e.g., a toothed circle, an oval). In some example embodiments, the holder 121b may be a casing to hold the suppressing material 123b, however, the holder 121b may alternatively be a frame, a cage, and/or a support to hold the suppressing material 123b. In some example embodiments, the holder 121b may work cooperatively with the stator frame 111 to secure the suppressing material 123b. The suppressing material 123b may be a same or different material to the material of the suppressing material 123.

Accordingly, the suppressing module 120b may reduce or prevent at least one type of parasitic currents and improve operation of the electric drive system 100b.

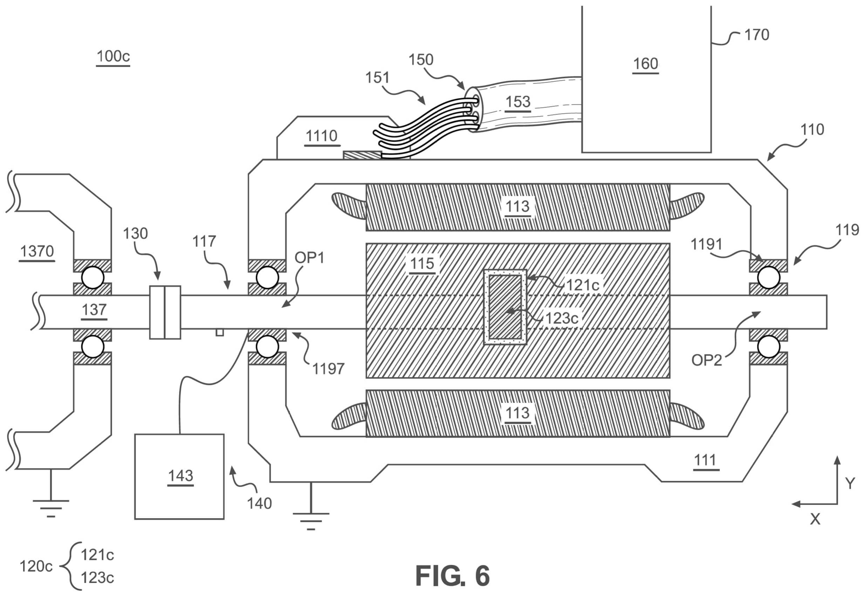

FIG. 6 illustrates an electric drive system for an electrical machine according to some example embodiments.

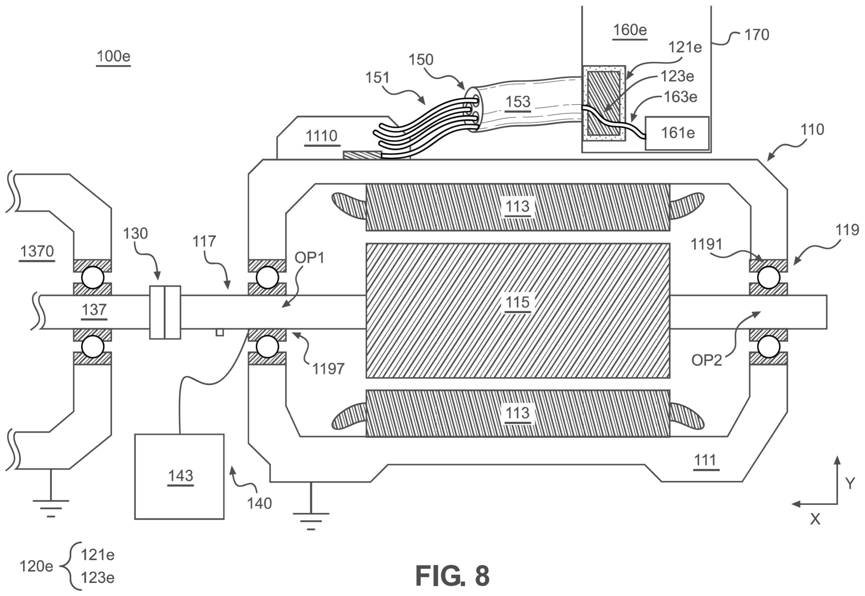

Below, for convenience of description, additional description associated with the components described above will be omitted to avoid redundancy. Referring to FIG. 8, the electric drive system 100c may include a motor 110c, a suppressing module 120c, a coupler 130, a lubrication system 140, a bus bar 150, an inverter 160, and an electronic data processing system 170. The motor 110c may include a stator frame 111, a stator winding 113, a rotor 115c, a shaft 117, and the bearings 119.

In some example embodiments, the suppressing module 120c is on the shaft 117 within the rotor 115c. The rotor 115c may be the same as or similar to the rotor 115 beyond the suppressing module 120c being within to the rotor 115c. In some example embodiments, a length of the suppressing module 120c in the first direction X may be entirely within the rotor 115c. In some example embodiments, at least one outer face, facing the first direction X, of the suppressing module 120c may be coplanar or substantially coplanar with an outer face, facing the first direction X, of the rotor 115c. In some example embodiments, the suppressing module 120c may extend along the shaft 117 beyond at least one outer face, facing the first direction X, of the rotor 115c in the first direction X. The suppressing module 120c may be centered in the first direction X in the rotor 115c, or may be offset to either side of the center of the rotor 115c.

The suppressing module 120c may include a holder 121c and a suppressing material 123c. The suppressing module 120c may be the same as or similar to the suppressing module 120 beyond the suppressing module 120c being within the rotor 115c.

In some example embodiments, the suppressing material 123c may have a toroidal shape with an inner circumference larger than the outer circumference of the shaft 117 such that the suppressing material 123c surrounds the shaft 117. In some example embodiments, the inner circumference of the suppressing material 123c may have a same but larger shape to the profile of the shaft 117, a shape closely matched to the profile of the shaft 117, or may be a different shape in profile (e.g., a toothed circle, an oval). In some example embodiments, the holder 121c may be a casing to hold the suppressing material 123c, however, the holder 121c may alternatively be a frame, a cage, and/or a support to hold the suppressing material 123c. In some example embodiments, the holder 121c may work cooperatively with the rotor 115c to secure the suppressing material 123c. In some example embodiments, the holder 121c may not be included, and the rotor 115c may secure the rotor 115c. The suppressing material 123c may be a same or different material to the material of the suppressing material 123.

Accordingly, the suppressing module 120c may reduce or prevent at least one type of parasitic currents and improve operation of the electric drive system 100c.

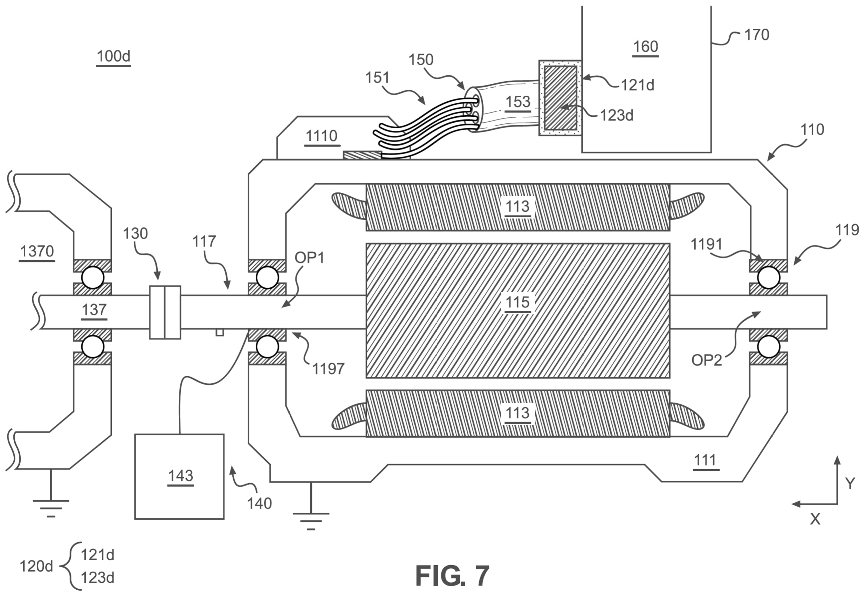

FIG. 7 illustrates an electric drive system for an electrical machine according to some example embodiments.

Below, for convenience of description, additional description associated with the components described above will be omitted to avoid redundancy. Referring to FIG. 7, the electric drive system 100d may include a motor 110, a suppressing module 120d, a coupler 130, a lubrication system 140, a bus bar 150, an inverter 160, and an electronic data processing system 170.

In some example embodiments, the suppressing module 120d may be on the bus bar 150 between a stator frame 111 of the motor 110 and the inverter 160. The suppressing module 120d may include a holder 121d and a suppressing material 123d. The suppressing module 120d may be the same as or similar to the suppressing module 120 beyond the suppressing module 120d being joined to the bus bar 150.

In some example embodiments, the suppressing material 123d may have a toroidal shape with an inner circumference larger than the outer circumference of the bus bar 150 such that the suppressing material 123d surrounds the bus bar 150. In some example embodiments, the inner circumference of the suppressing material 123b may have a same but larger shape to the profile of the bus bar 150, a shape closely matched to the profile of the bus bar 150, or may be a different shape in profile (e.g., a toothed circle, an oval). In some example embodiments, the holder 121d may be a casing to hold the suppressing material 123d, however, the holder 121d may alternatively be a frame, a cage, and/or a support to hold the suppressing material 123d. The suppressing material 123d may be a same or different material to the material of the suppressing material 123.

In some example embodiments, the suppressing module 120d may be (e.g., directly) adjacent to the inverter 160, (e.g., directly) adjacent to the stator frame 111, or therebetween. In some example embodiments, the suppressing module 120d is fixed to one of the inverter 160 or the stator frame 111, or may be slidable along the bus bar 150.

Accordingly, the suppressing module 120d may reduce or prevent at least one type of parasitic currents and improve operation of the electric drive system 100d.

FIG. 8 illustrates an electric drive system for an electrical machine according to some example embodiments.

Below, for convenience of description, additional description associated with the components described above will be omitted to avoid redundancy. Referring to FIG. 8, the electric drive system 100e may include a motor 110, a suppressing module 120e, a coupler 130, a lubrication system 140, a bus bar 150, an inverter 160e, and an electronic data processing system 170. The inverter 160e may include circuitry 161e (not shown) configured to receive/transmit commands to control the electric drive system 100e and wiring 163e (not shown) to connect the circuitry 161e to the bus bar 150.

In some example embodiments, the suppressing module 120e may be in the inverter 160e between a frame of the inverter 160e and circuitry of the inverter 160e, for example, on the wiring 163e. The suppressing module 120e may include a holder 121e and a suppressing material 123e. The suppressing module 120e may be the same as or similar to the suppressing module 120 beyond the suppressing module 120e being joined to the inverter 160e.

In some example embodiments, the suppressing material 123e may have a toroidal shape with an inner circumference larger than the outer circumference of the wiring 163e such that the suppressing material 123e surrounds the wiring 163e. In some example embodiments, the inner circumference of the suppressing material 123e may have a same but larger shape to the profile of the wiring 163e, a shape closely matched to the profile of the wiring 163e, or may be a different shape in profile (e.g., a toothed circle, an oval). In some example embodiments, the holder 121e may be a casing to hold the suppressing material 123e, however, the holder 121e may alternatively be a frame, a cage, and/or a support to hold the suppressing material 123e. In some example embodiments, the holder 121e may work cooperatively with the frame of the inverter 160e to secure the suppressing material 123e. The suppressing material 123e may be a same or different material to the material of the suppressing material 123.

Accordingly, the suppressing module 120e may reduce or prevent at least one type of parasitic currents and improve operation of the electric drive system 100e.

Although the example embodiments of FIGS. 1-8 have been illustrated separately, the suppressing modules 120 to 120e (and supporting features) may be variously combined. For example, an electric drive system may include one or more of the suppressing modules 120 to 120e. For example, an electric drive system may include various suppressing modules 120 to 120e along the shaft 117, except where the shaft is held by the bearings 119, the coupler 130, the connecting shaft 137, the bus bar 150, and in the inverter 160.

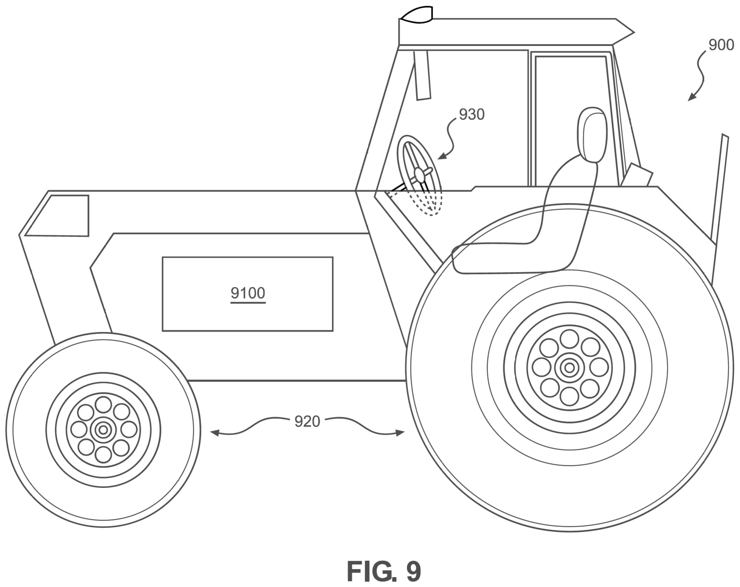

FIG. 9 illustrates a vehicle including an electrical machine according to some example embodiments.

Below, for convenience of description, additional description associated with the components described above will be omitted to avoid redundancy. Referring to FIG. 9, in some example embodiments, the vehicle 900 may include a drive system 9100, ground engaging element 920, and a steering module 930. The vehicle 900 may be, for example, a tractor, a combine, a mower, etc. The drive system 9100 may be an electric drive system (e.g., 100 to 100e) including at least one of the suppressing modules 120 to 120e. The drive system 9100 may power and propel the ground engaging elements 920. In some example embodiments, the ground engaging elements may be a wheel, a track, a tire, etc. The steering module 930 may direct the ground engaging elements 920 to control a movement of the vehicle 900.

When the terms "about" or "substantially" are used in this specification in connection with a numerical value, it is intended that the associated numerical value includes a manufacturing or operational tolerance (e.g., ±10 %) around the stated numerical value. Moreover, when the words "generally" and "substantially" are used in connection with geometric shapes, it is intended that precision of the geometric shape is not required but that latitude for the shape is within the scope of the disclosure. Further, regardless of whether numerical values or shapes are modified as "about" or "substantially," it will be understood that these values and shapes should be construed as including a manufacturing or operational tolerance (e.g., ±10 %) around the stated numerical values or shapes.

While the present disclosure has been described with reference to embodiments thereof, it will be apparent to those of ordinary skill in the art that various changes and modifications may be made thereto without departing from the spirit and scope of the present disclosure as set forth in the following claims.

## Claims

1. An electric machine motor assembly (110) comprising:
an electric power source (160);
an electric motor (110) configured to be driven by the electric power source (160), the electric motor (110) including
a stator frame (111),
a stator winding (113) attached to the stator frame (111),
a rotor (115) surrounded by the stator winding (112),
a shaft (117) extending from the rotor (115) through the stator frame (111), and bearings (119) between the shaft (117) and the stator frame (111); and
a suppressing material (123) on the shaft.

2. The electric machine motor assembly of claim 1, wherein the suppressing material (123) is a ferrite material.

3. The electric machine motor assembly of claim 1, wherein the suppressing material (123) is a toroidal shape completely surrounding a circumference of a portion of the shaft.

4. The electric machine motor assembly of claim 1, wherein the suppressing material (123) is a first distance from the rotor (115), the first distance based on a size of a magnetic field generated by the suppressing material (123).

5. The electric machine motor assembly of claim 1, wherein the suppressing material (123) is along the shaft (117), and the bearings (119) are between the suppressing material (123) and the rotor (115).

6. The electric machine motor assembly of claim 1, wherein the suppressing material (123) is along the shaft (117) between the bearings (119) and the rotor (115).

7. The electric machine motor assembly of claim 6, further comprising another suppressing material (123) along the shaft (117) between the bearings (119) and the rotor (115) opposite the suppressing material (123).

8. The electric machine motor assembly of claim 1, wherein the suppressing material (123) is along the shaft (117) and within the rotor (115).

9. The electric machine motor assembly (100) of claim 1, further comprising a lubrication system (140, the lubrication system (140) configured to dissipate heat from the electric motor (110) and the suppressing material (123) and reduce friction between the electric motor (110) and the suppressing material (123).

10. An electric machine drive train (100) comprising:
an electric machine motor assembly (100) including an electric motor (110) configured to be driven by an electric power source (160), the electric motor (110) including
a stator frame (111),
a stator winding (113) attached to the stator frame (111),
a rotor (115) surrounded by the stator winding (113),
a shaft (117) extending from the rotor (115) through the stator frame (111), and
bearings (119) between the shaft (117) and the stator frame (111);
a transmission (1370) including a transmission shaft (137);
a coupler (130) connecting the shaft (117) to the transmission shaft (137); and
a suppressing material (123).

11. The electric machine drive train (100) of claim 10, wherein
the suppressing material (123) is a ferrite material,
the suppressing material (123) is a toroidal shape completely surrounding a circumference of a portion of the coupler (130), and
the suppressing material is separated from the coupler (130) by a lubricant (141).

12. The electric machine drive train of claim 10, wherein the suppressing material (1232) is along the shaft (117), and the bearings (119) are between the suppressing material (123) and the rotor (115).

13. The electric machine drive train of claim 10, wherein the suppressing material (123) is along the shaft (117) between the bearings (119) and the rotor (115).

14. The electric machine drive train of claim 10, wherein the suppressing material (123) is on the coupler (130) between the electric motor (110) and the transmission (1370).

15. The electric machine drive train of claim 10, wherein the suppressing material (123) is along the shaft (117) and within the rotor (115).

## Amended claims

### Amended claims in accordance with Rule 137(2) EPC.

1. An electric machine motor assembly (110) comprising:
an electric power source (160);
an electric motor (110) configured to be driven by the electric power source (160), the electric motor (110) including
a stator frame (111),
a stator winding (113) attached to the stator frame (111),
a rotor (115) surrounded by the stator winding (112),
a shaft (117) extending from the rotor (115) through the stator frame (111), and bearings (119) between the shaft (117) and the stator frame (111); and
a suppressing material (123) along the shaft;
**characterized in that** the bearings (119) are between the suppressing material (123) and the rotor (115),
or that the suppressing material (123) is along the shaft (117) between the bearings (119) and the rotor (115) and another suppressing material (123) is along the shaft (117) between the bearings (119) and the rotor (115) opposite the suppressing material (123).

2. The electric machine motor assembly of claim 1, wherein the suppressing material (123) is a ferrite material.

3. The electric machine motor assembly of claim 1, wherein the suppressing material (123) is a toroidal shape completely surrounding a circumference of a portion of the shaft.

4. The electric machine motor assembly of claim 1, wherein the suppressing material (123) is a first distance from the rotor (115), the first distance based on a size of a magnetic field generated by the suppressing material (123).

5. The electric machine motor assembly (100) of claim 1, further comprising a lubrication system (140), the lubrication system (140) configured to dissipate heat from the electric motor (110) and the suppressing material (123) and reduce friction between the electric motor (110) and the suppressing material (123).

6. An electric machine drive train (100) comprising:
an electric machine motor assembly (100) including an electric motor (110) configured to be driven by an electric power source (160), the electric motor (110) including
a stator frame (111),
a stator winding (113) attached to the stator frame (111),
a rotor (115) surrounded by the stator winding (113),
a shaft (117) extending from the rotor (115) through the stator frame (111), and bearings (119) between the shaft (117) and the stator frame (111); and
a suppressing material (123a);
**characterized in that** the drive train (100) comprises:
a transmission (1370) including a transmission shaft (137); and
a coupler (130) connecting the shaft (117) to the transmission shaft (137);
and that the suppressing material (123a) is on the coupler (130) between the electric motor (110) and the transmission (1370).

7. The electric machine drive train (100) of claim 6, wherein
the suppressing material (123a) is a ferrite material,
the suppressing material (123a) is a toroidal shape completely surrounding a circumference of a portion of the coupler (130), and
the suppressing material is separated from the coupler (130) by a lubricant (141).
